# EUROPÄISCHE PATENTSCHRIFT

(11) **EP 0 663 556 B1**
(45) Veröffentlichungstag und Bekanntmachung des Hinweises auf die Patenterteilung: **18.03.1998**
(21) Anmeldenummer: 94120579.1
(22) Anmeldetag: 23.12.1994
(51) Int. Cl.: F16L 27/08

(54) **Drehdurchführung**
Turnable connection
Jonction rotative

(30) Priorität: 18.01.1994 DE 9400767 U
(43) Veröffentlichungstag der Anmeldung: 19.07.1995
(73) Patentinhaber: Compact Truck AG, 6300 Zug (CH); Lutz, Franz, 89584 Ehingen (DE); Kaspar, Ernst, 89597 Munderkingen (DE)
(72) Erfinder: Kaspar, Ernst, D-89597 Munderkingen (DE)
(74) Vertreter: Grünecker, Kinkeldey, Stockmair & Schwanhäusser Anwaltssozietät

(56) Entgegenhaltungen:
- EP-A- 0 429 413
- FR-A- 2 134 596
- US-A- 3 062 151
- US-A- 3 662 623

## Beschreibung

Die vorliegende Erfindung betrifft eine Drehdurchführung zum Durchführen von mindestens zwei Flüssigkeiten und/oder anderen Medien zwischen einem drehbeweglichen Teil und einem feststehenden Teil der im Oberbegriff des Anspruchs 1 angegebenen Gattung. Eine entsprechende Drehdurchführung ist beispielsweise aus der EP-A- 2 134 596 bekannt.

Drehdurchführungen werden in der Regel bei Kraftfahrzeugen eingesetzt, beispielsweise bei Kranfahrzeugen, bei denen zwischen den Hydraulik-Versorgungsleitungen des drehbaren Aufbaus, wie z.B. eines Kranes und eines relativ zum Kran festen Fahrzeugrahmens, eine geeignete Verbindung hergestellt werden muß. Beispielsweise ist eine solche Drehdurchführung erforderlich, um die Versorgung des von einer Fahrpumpe, die drehfest mit dem Kranaufbau verbunden ist, geförderten Hydrauliköls an den relativ dazu feststehenden hydrostatischen Radantrieben mit Hydrauliköl sicherzustellen. Um eine sicherheitsgefährdende Verdrehung der Versorgungszuleitungen zu vermeiden, wird zwischen Fahrpumpe und Radantrieb üblicherweise eine Vorrichtung eingesetzt, die die Drehbewegung der Versorgungsleitungen des Kranaufbaues an die feststehenden Versorgungsleitungen des Fahrzeugrahmens anpaßt.

Eine Drehdurchführung mit einer am Fahrzeugrahmen verbundenen, feststehenden, ersten Baugruppe und mit einer zweiten, an einem Kranaufbau drehbeweglichen Baugruppe, ist aus dem deutschen Gebrauchsmuster G 93 02 376.6 bekannt. Hierbei sind in der sich mit dem Drehaufbau drehenden zweiten Baugruppe Ölzuführungskanäle ausgebildet, die mit ihren oberen Enden seitlich an Hydrauliköleinlässen angeschlossen sind. Diese Ölzuleitungskanäle münden jeweils in einen Ringkanal, der zu dem jeweils angrenzenden Bauteil der rahmenfesten ersten Baugruppe offen ist. In diese Ringkanäle (der drehbeweglichen Baugruppe) öffnen sich jeweils Hydraulikölzuleitungen, die in den rahmenfesten Teilen ausgebildet sind und durch welche das Öl von den jeweiligen Ringkanälen durch Auslässe seitlich unten an der rahmenfesten Baugruppe zur Außenoberfläche strömt. In der drehbeweglichen Baugruppe sind vier Ringkanäle vorgesehen, die paarweise jeweils in Eingriff bringbar sind mit der zweischalig ausgebildeten, rahmenfesten Baugruppe.

Bei einer derartigen konstruktiven Auslegung ist jedoch selbst bei hohen Fertigungsanforderungen im Bereich der Ringkanäle zwischen drehbeweglicher und feststehender Baugruppe eine zufriedenstellende Dichtigkeit zwischen den einzelnen Durchleitungen nicht herstellbar. Somit ist eine derartige Drehdurchführung für die Verwendung von von Hydrauliköl verschiedenen Durchführungsmedien kaum geeignet. Um den Einsatz verschiedener Medien zu ermöglichen, wäre eine Durchführung nach dem Stand der Technik mit zusätzlichen Leckleitungen auszustatten. Diese Maßnahme ist jedoch sehr teuer und aufwendig herstellbar, da eine Überschneidung mit dem bestehenden Zu- und Ableitungssystem vermieden werden muß. Weiterhin sind mit lediglich vier Öldurchführungen nur sehr bedingte Einsatzmöglichkeiten gegeben. Bei zusätzlichem Leckleitungssystem wäre eine wesentliche Aufstockung der Durcnführungskanäle kaum fertigbar.

Der Erfindung liegt daher die Aufgabe zugrunde, eine verbesserte Drehdurchführung der eingangs genannten Gattung bereitzustellen, die bei einer sehr kompakten Bauweise eine größere Menge an Durchleitungen, nicht nur für Hydrauliköl, sondern auch für andere Medien zuläßt.

Diese Aufgabe wird erfindungsgemäß durch den Gegenstand des Anspruchs 1 gelöst.

Der mit der Erfindung erzielbare technische Fortschritt ist in erster Linie darin zu sehen, daß bei einer relativ geringen Gesamtbauhöhe die erfindungsgemäße Drehdurchführung eine Vielzahl von Belegungskanälen erlaubt, welche darüber hinaus von verschiedenen, voneinander getrennten Medien durchflossen werden können, ohne daß eine zuzätzliche Installation von Leckleitungen erforderlich ist. Ferner ermöglichst die Anordnung des feststehenden Teils an der Außenseite die Verbindung mehrerer Leitungen zu einem Kanal, so daß eine Verteilerfunktion gegeben ist. Der Aufbau dieser Drehdurchführung erlaubt zudem eine Steigerung der Integrationsdichte durch weitere Durchführungsstufen bzw. eines elektrischen Schleifringkörpers.

Weitere Vorteile und Merkmale der Erfindung sind in den Unteransprüchen dargestellt.

Die Erfindung wird nachstehend anhand eines Ausführungsbeispieles und zugehöriger Zeichnungen näher erläutert. In diesen zeigen:
- Fig. 1: einen Längsschnitt einer Drehdurchführung,
- Fig. 2: eine Draufsicht der Drehdurchführung nach Fig. 1 in Richtung A,
- Fig. 3: eine Ansicht der Drehdurchführung in Richtung B nach Fig. 1 und
- Fig. 4: einen Horizontalschnitt der Drehdurchführung entlang der Linie C-D nach Fig. 1.

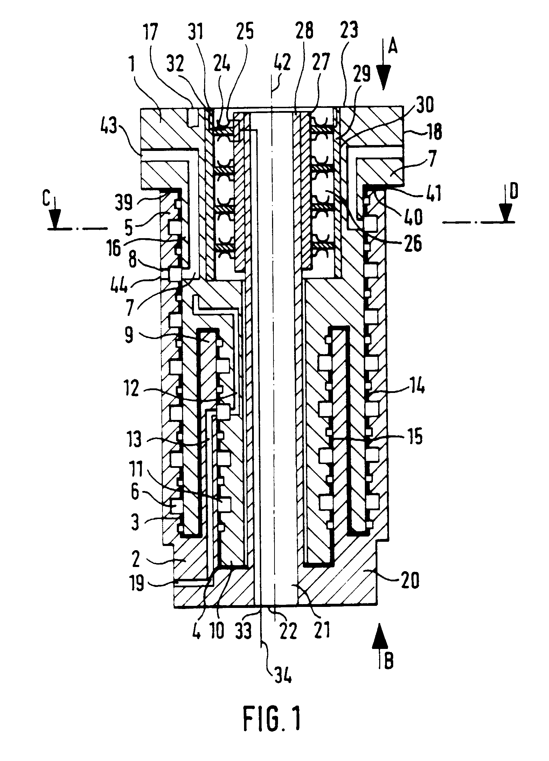

Gemäß Fig. 1 weist die Drehdurchführung zwei gegeneinander verdrehbare Teile 2, 1 auf, wobei das untere Teil 2 feststehend an einem Fahrzeugrahmen befestigt ist und das obere Teil 1 drehbeweglich mit einem drehbaren Fahrzeugaufsatz verbunden ist.

In der vorliegenden Ausführungsform sollen drei verschiedene Medien durchgeführt werden. Eine erste Drehdurchführungsstufe ist im wesentlichen für die Durchführung von Hydrauliköl vorgesehen. Dabei gelangt das Öl von einem seitlichen Zuleitungsanschluß 43 am oberen Abschnitt 18 des drehbeweglichen Teiles 1 über einen Zuleitungskanal 7 in einen als Ringnut ausgebildeten Ringkanal 6 des feststehenden Teiles 2. Abschließend mündet das Hydrauliköl vom Ringkanal ausgehend durch einen horizontal weiterführenden Ableitungskanal 8 in einem ersten Auslaß 44. In er Schnittdarstellung gemäß Fig. 1 sind beispielhaft Zu- und Ableitungskanäle 7, 8 dargestellt. Die Symmetrielinien aller vertikalen Abschnitte der Zuleitungskanäle 7 weisen im wesentlichen einen gleichen radialen Abstand zur Mittelachse 42 auf. Die weiteren Zuleitungskanäle sind in anderen Schnittebenen gegeben. Weitere Ableitungskanäle 8 sind über den Umfang verteilt angeordnet. Zwei von insgesamt sieben Ringkanälen 6 sind bevorzugt mit einer Zuleitung 7 verbunden. Dies erlaubt die Doppelbelegung eines Kanals.

Eine zweite Drehdurchführungsstufe ist für das Durchführen von gasförmigen Medien vorgesehen. Die Zuleitungsanschlüsse 17 sind an der Oberseite des oberen Abschnittes 18 des drehbeweglichen Teiles 1 angeordnet. Von dort führt der Zuleitungskanal 12 zu einem Ringkanal 11 im drehbeweglichen Teil. In dem sich an den Ringkanal 11 anschließenden rahmenfesten Teil 2 ist ein Ableitungskanal 13 vorgesehen, der eine Verbindung zwischen dem Ringkanal und einem zweiten Auslaß 19 im unteren Abschnitt 20 des feststehenden Teiles 2 herstellt. In der Zeichnung gemäß Fig. 1 ist lediglich der schematische Verlauf von Zuleitungskanälen 12 und Ableitungskanälen 13 dargestellt. Zwei von insgesamt fünf Ableitungskanälen 13 der zweiten Drehdurchführungsstufe sind mit einem Ringkanal 11 verbunden. Eine Mehfachbelegung ist somit möglich.

Dadurch, daß die Zuleitungsanschlüsse für das Hydrauliköl am oberen Abschnitt 18 des drehbeweglichen Teiles 1 seitlich vorgesehen sind und die Zuleitungsanschlüsse 17 für die gasförmigen Medien am oberen Abschnitt 18 des drehbeweglichen Teiles 1 oben angeordnet sind, wird eine Fehlbelegung vermieden. Die Kanäle 12, 13 er zweiten Durchführungsstufe weisen einen geringeren Durchlaßquerschnitt als die Kanäle 7, 8 der ersten Drehdurchführungsstufe auf. Dies ist erforderlich, um eine an das Medium angepaßte Durchflußgeschwindigkeit und Menge zu erzielen. Die Anordnung von Ringkanälen 6, 11 an Gleitflächen 3, 3', 4, 4' zwischen feststehendem und drehbeweglichem Teil 2, 1 gewährleistet somit in jeder Drehposition der beiden Teile gegeneinander einen offenen Zugang für die Zuleitungskanäle 7, 12 bzw. Ableitungskanäle 8, 13. Oberhalb und unterhalb von jedem Ringkanal 6, 11 sind an der Gleitfläche 3, 4' zwischen drehbeweglichem und feststehendem Teil 1, 2 ringförmige Isolationseinrichtungen 14, 15 vorgesehen. Dies erlaubt zum einen einen sicheren Dichtheitsabschluß zwischen den einzelnen Ringkanälen und zum anderen zwei hintereinander geschaltete Isolationseinrichtungen zwischen erster und zweiter Drehdurchführung, womit eine besonders sichere Trennung zwischen zwei verschiedenen Durchführungsmedien gewährleistet ist. weiterhin macht dies den Einsatz von zusätzlichen Leckleitungen zwischen den Ringkanälen 6, 11 unnötig.

Drehbewegliches Teil 1 und feststehendes Teil 2 sind formschlüssig miteinander in lamellenartigem Eingriff. Hierbei sind zwischen drei im wesentlichen hohlzylinderartigen Abschnitten 5, 9, 28 des feststehenden Teiles 2 zwei im wesentlichen hohlzylinderartige Abschnitte 16, 10 des drehbeweglichen Teiles 1 angeordnet.

Bei einer dem gleichen Wirkungsprinzip folgenden weiteren Drehdurchführung kann von außen nach innen ein äußerer, drehbeweglicher Hohlzylinderabschnitt und ein äußerer, feststehender Hohlzylinderabschnitt, ein innerer, drehbeweglicher Hohlzylinderabschnitt und ein innerer, feststehender (Hohl-)zylinderabschnitt angeordnet sein.

Ein Schleifringkörper 23 ist als integraler Bestandteil der Drehdurchführung zur Durchführung von elektrischen Strömen vorgesehen. Hierzu ist der Schleifringkörper 23 in einer Ausnehmung 26 des oberen Abschnitts 18 des drehbeweglichen Teiles 1 aufgenommen. An einer Innenseite 30 des drehbeweglichen Teiles 1 ist eine Drehhülse 29 befestigt. Rechtwinklig von dieser Drehhülse 29 vorspringend sind vier parallel zueinander angeordnete und gegeneinander isolierte Ringscheiben 24 vorgesehen. Diese elektrisch leitfähigen Ringscheiben 24 stehen in ständigem schleifenden Kontakt mit ebenso elektrisch leitfähigen Doppelschleifklammern 25. Die Doppelschleifklammern 25 sind über eine Festhülse 27 mit einem oberen Ende des innersten Hohlzylinderabschnittes 28 des feststehenden Teiles 3 verbunden. Elektrische Zuleitungen 31 übertragen elektrische Ströme von den Eingangsanschlüssen 32, die an der Oberseite des drehbeweglichen Teiles 1 kreisförmig angeordnet sind, auf die Ringscheiben 24. Die Doppelschleifklammern 25 nehmen den anliegenden Strom unabhängig von der Drehposition des drehbeweglichen Teiles auf. Eine elektrische Leitung 33, die innerhalb der Bohrung 21 verlegbar ist, tritt an der Unterseite 22 des feststehenden Teiles 2 heraus und stellt somit eine Verbindung zwischen Doppelschleifklammer 25 und Ausgangsanschluß 34 her.

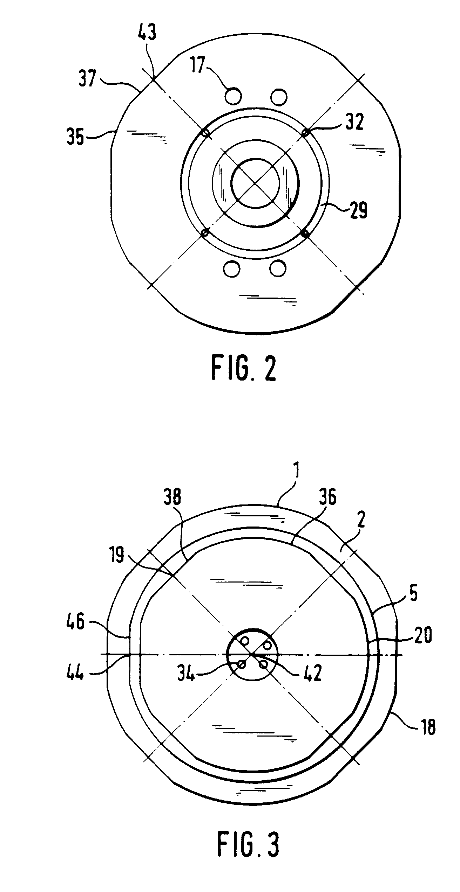

Wie weiterhin aus Fig. 1 hervorgeht, ist das drehbewegliche Teil 1 im wesentlichen über eine Unterseite 39 des oberen Abschnittes 18 des drehbeweglichen Teiles 1 auf einer Oberseite 40 des äußeren Hohlzylinderabschnittes 5 des feststehenden Teiles gelagert. Gemäß Fig. 2 ist die Außenkontur des oberen Abschnittes 18 des drehbeweglichen Teiles 1 im wesentlichen von zylindrischer Form, wobei sich ebenflächige Abschnitte 37 mit gerundeten Abschnitten 35 abwechseln. Die ebenflächigen Abschnitte dienen dabei als Flansch für die seitlichen Hydraulikölanschlüsse 43. Die schematische Darstellung nach Fig. 2 zeigt sechs Flansche, wobei zwischen drei Flanschen ein längerer gerundeter Abschnitt ausgebildet ist. Weiterhin nur schematisch dargestellt sind die oberen Anschlüsse 17 für das gasförmige Medium. Die vier in Fig. 2 dargestellten elektrischen Anschlüsse 32 sind in Viertelkreisabständen zueinander angeordnet.

Gemäß Fig. 3 weist der äußere Hohlzylinderabschnitt 5 des feststehenden Teiles 2 an einer Seite einen ebenflächigen Flanschabschnitt 46 auf, an dem untereinander, vorzugsweise über den Umfang verteilt, die Ausgangsanschlüsse 44 der ersten Drehdurchführungsstufe aufgereiht sind. An der im wesentlichen zylindrischen Außenkontur des unteren Abschnittes 20 des feststehenden Teiles 2 wechseln sich fünf gerundete Abschnitte 36 mit fünf ebenflächigen Abschnitten 38 ab. Die ebenflächigen Abschnitte dienen als Flansche, an denen die Ausgangsanschlüsse 19 der zweiten Drehdurchführungsstufe vorgesehen sind. Die gesamte Außenkontur der Drehdurchführung weist einen unteren Abschnitt 20 des feststehenden Teiles auf, der mittels eines Vorsprunges als Hohlzylinderabschnitt 5 weitergeführt wird. Ein weiterer Vorsprung nach dem oberen Ende des Hohlzylinderabschnittes 5 überführt zu dem oberen Abschnitt 18 des drehbeweglichen Teiles 1.

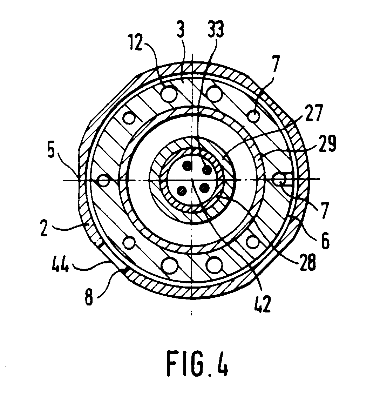

Entsprechend Fig. 4 sind die Symmetrieachsen der Zuleitungen 7, 12 im wesentlichen auf einem Kreis mit gleichem radialem Abstand zur Mittelachse 42 angeordnet. Des weiteren zeigt Fig. 4 die ringartige Ausbildung des Ringkanales 6 mit einer Ableitung 8 und einer Zuleitung 7.

## Patentansprüche

1. Drehdurchführung zum Durchführen von mindestens zwei Flüssigkeiten und/oder anderen Medien zwischen einem drehbeweglichen Teil (1) und einem feststehenden Teil (2), **dadurch gekennzeichnet**, daß in der Drehdurchführung von außen nach innen ein äußerer feststehender Hohlzylinderabschnitt (5) und ein äußerer drehbeweglicher Hohlzylinderabschnitt (16), ein innerer feststehender Hohlzylinderabschnitt (9) und ein innerer drehbeweglicher (Hohl-)zylinder (10) paarweise, lamellenartig miteinander verschränkt, angeordnet sind, wobei eine erste Drehdurchführungsstufe dadurch gebildet ist, daß die Gleitfläche (3) des äußeren Hohlzylinderabschnittes (5) vom feststehenden Teil (2) mit einer Gleitfläche (3') des äußeren Hohlzylinderabschnittes (16) vom drehbeweglichen Teil (1) in Eingriff ist, daß an diesen Gleitflächen (3, 3') eine Vielzahl horizontaler, zueinander parallel verlaufender Ringkanäle (6) vorgesehen ist, die erste Zuleitungen (7) vom drehbeweglichen Teil (1) mit ersten Ableitungen (8) vom feststehenden Teil (2) miteinander verbinden, daß eine zweite Drehdurchführungsstufe dadurch gebildet ist, daß eine Gleitfläche (4) des inneren Hohlzylinderabschnittes (9) vom feststehenden Teil (2) mit einer Gleitfläche (4') des inneren Hohlzylinderabschnittes (10) vom drehbeweglichen Teil (1) in Eingriff ist, daß an diesen Gleitflächen (4, 4') im inneren Hohlzylinderabschnitt (10) eine Vielzahl horizontaler, zueinander parallel verlaufender Ringkanäle (11) vorgesehen ist, die zweite Zuleitungen (12) vom drehbeweglichen Teil mit zweiten Ableitungen (13) vom feststehenden Teil miteinander verbinden und daß allen Ringkänalen (6, 11) beider Drehdurchführungsstufen jeweils eine obere und eine untere Isolationseinrichtung (14, 15) an der Gleitfläche (3, 4) zugeordnet ist.

2. Drehdurchführung nach Anspruch 1, **dadurch gekennzeichnet**, daß für jede Drehdurchführungsstufe ein anderes, verschiedenes Übertragungsmedium vorgesehen ist.

3. Drehdurchführung nach Anspruch 2, **dadurch gekennzeichnet**, daß die erste Drehdurchführungsstufe von einem flüssigen Übertragungsmedium durchfließbar ist und die zweite Drehdurchführungsstufe von einem gasförmigen Übertragungsmedium durchfließbar ist.

4. Drehdurchführung nach mindestens einem der Ansprüche 1 bis 3, **dadurch gekennzeichnet**, daß die Drehdurchführung mindestens zwei Drehdurchführungsstufen aufweist.

5. Drehdurchführung nach mindestens einem der Ansprüche 1 bis 4, **dadurch gekennzeichnet**, daß die Anzahl der Ringkanäle (6) der ersten Drehdurchführungsstufe unabhängig wählbar ist von der Anzahl der Ringkanäle (11) der zweiten Drehdurchführungsstufe.

6. Drehdurchführung nach mindestens einem der Ansprüche 1 bis 5, **dadurch gekennzeichnet**, daß die Ringkanäle (6) der ersten Drehdurchführungsstufe im äußeren Hohlzylinderabschnitt (5) vorgesehen sind.

7. Drehdurchführung nach mindestens einem der Ansprüche 1 bis 6, **dadurch gekennzeichnet**, daß der obere und der untere Abschnitt (18, 20) des drehbeweglichen bzw. des feststehenden Teiles (1, 2) eine im wesentlichen rotationssymmetrische, zylindrische Form aufweist, wobei sich gerundete Außenflächen (35, 36) mit ebenen Außenflächen (37, 38) abwechseln.

8. Drehdurchführung nach mindestens einem der Ansprüche 1 bis 7, **dadurch gekennzeichnet**, daß voneinander getrennte Einlässe (17, 43) an dem oberen Abschnitt (18) des drehbeweglichen Teiles (1) vorgesehen sind, daß zweite Auslässe (19) an dem unteren Abschnitt (20), und daß erste Auslässe (44), untereinander horizontal verlaufend, an der Seite des Hohlzylinderabschnittes (5) angeordnet sind.

9. Drehdurchführung nacn Anspruch 7 oder 8, **dadurch gekennzeichnet**, daß die Einlässe (43) an den ebenen Außenflächen (37), die ersten Auslässe (44) an den ebenen Außenflächen (46) und die zweiten Auslässe (19) an einer ebenen Außenfläche (38) vorgesehen sind.

10. Drehdurchführung nach mindestens einem der Ansprüche 1 bis 9, **dadurch gekennzeichnet**, daß die Zuleitungen (7,12) der jeweiligen Drehdurchführungsstufe und die Ableitungen (8, 13) der jeweiligen Drehdurchführungsstufe auf gleicher Höhe in der Drehdurchführung jeweils im wesentlichen gleiche radiale Abstände zu einer Mittelachse (42) aufweisen.

11. Drehdurchführung nacn mindestens einem der Ansprüche 1 bis 10, **dadurch gekennzeichnet**, daß die Drehdurchführung eine zentrale Bohrung (21) aufweist.

12. Drehdurchführung nach Anspruch 11, **dadurch gekennzeichnet**, daß die zentrale Bohrung (21) im feststehenden Teil (2) vorgesehen ist.

13. Drehdurchführung nacn mindestens einem der Ansprüche 1 bis 12, **dadurch gekennzeichnet**, daß die Drehdurchführung einen Schleifringkörper (23) zur Übertragung elektrischer Ströme aufweist.

14. Drehdurchführung nacn Anspruch 13, **dadurch gekennzeichnet**, daß der Schleifringkörper (23) integraler Bestandteil der Drehdurchführung ist.

15. Drehdurchführung nach Anspruch 12 oder 13, **dadurch gekennzeichnet**, daß der Schleifringkörper (23) elektrisch leitfähige Kontakte (24) aufweist, die gegeneinander isoliert sind und drehfest mit dem drehbeweglichen Teil (1) verbunden sind, und daß der Schleifringkörper (23) elektrisch leitfähige Kontakte (25) aufweist, die gegeneinander isoliert sind und fest mit dem feststehenden Teil (2) verbunden sind und mit einem jeweilig zugehörigen drehbeweglichen Kontakt (24) im Eingriff sind.

16. Drehdurchführung nach Anspruch 15, **dadurch gekennzeichnet**, daß die drehbeweglichen Kontakte (24) als Ringscheiben und die feststehenden Kontakte (25) als Doppelschleifklammern ausgebildet sind.

17. Drehdurchführung nach mindestens einem der Ansprüche 11, 12, 13 oder 14, **dadurch gekennzeichnet**, daß die feststehenden Kontakte (25) innerhalb einer oberen Ausnehmung (26) der Drehdurchführung mit einer Festhülse (27) an einem feststehenden Hohlzylinderabschnitt (28), dessen Hohlraum durch die zentrale Bohrung (21) gebildet ist, verbunden sind, und die drehbeweglichen Kontakte (24) mit einer Drehhülse (29) an der vertikalen Innenseite (30) der oberen Ausnehmung (26) des drehbeweglichen Teiles (1) verbunden sind.

18. Drehdurchführung nach mindestens einem der Ansprüche 11, 12, 15 bis 17, **dadurch gekennzeichnet**, daß die drehbeweglichen elektrischen Leitungen (31) an Eingangsanschlüssen (32) an der Drehhülse (29) angeschlossen sind und daß die feststehenden elektrischen Leitungen (33) durch die Festhülse (27) und über die Bohrung (21) nach unten herausleitbar sind und den Ausgangsanschlüssen (34) zugeführt sind.

19. Drehdurchführung nach mindestens einem der Ansprüche 1 bis 18, **dadurch gekennzeichnet**, daß das drehbewegliche Teil (1) im wesentlichen über eine Unterseite (39) des oberen Abschnittes (18) des drehbeweglichen Teiles (1) auf einer Oberseite (40) des äußeren Hohlzylinderabschnittes (5) des feststehenden Teiles (2) gelagert ist.

## Claims

1. A rotary passage for passing at least two liquids and/or other media between a rotary member (1) and a stationary member (2), **characterized in** that an outer stationary hollow-cylindrical section (5) and an outer rotary hollow-cylindrical section (16), an inner stationary hollow-cylindrical section (9) and an inner rotary (hollow) cylinder (10) are arranged in said rotary passage from the outside to the inside in pairs and in lamellarly interlaced fashion, wherein a first rotary passage stage is formed in that the sliding surface (3) of said outer hollow-cylindrical section (5) of said stationary member (2) is in engagement with a sliding surface (3') of said outer hollow-cylindrical section (16) of said rotary member (1), and that said sliding surfaces (3, 3') have provided thereon a plurality of horizontal annular channels (6) which extend in parallel with one another and interconnect first feed lines (7) of said rotary member (1) to first discharge lines (8) of said stationary member (2), that a second rotary passage stage is formed in that a sliding surface (4) of said inner hollow-cylindrical section (9) of said stationary member (2) is in engagement with a sliding surface (4') of said inner hollow-cylindrical section (10) of said rotary member (1), and that said sliding surfaces (4, 4') in said inner hollow-cylindrical section (10) have provided thereon a plurality of horizontal annular channels (11) which extend in parallel with one another and interconnect second feed lines (12) of said rotary member to second discharge lines (13) of said stationary member, and that all of said annular channels (6, 11) of said two rotary passage stages have each assigned thereto upper and lower insulation means (14, 15) on said sliding surface (3, 4).

2. A rotary passage according to claim 1, **characterized in** that another different transmission medium is intended for each rotary passage stage.

3. A rotary passage according to claim 2, **characterized in** that a liquid transmission medium can flow through said first rotary passage stage and a gaseous transmission medium can flow through said second rotary passage stage.

4. A rotary passage according to at least one of claims 1 to 3, **characterized in** that said rotary passage comprises at least two rotary passage stages.

5. A rotary passage according to at least one of claims 1 to 4, **characterized in** that the number of said annular channels (6) of said first rotary passage stage can be selected independently of the number of said annular channels (11) of said second rotary passage stage.

6. A rotary passage according to at least one of claims 1 to 5, **characterized in** that said annular channels (6) of said first rotary passage stage are provided in said outer hollow cylindrical section (5).

7. A rotary passage according to at least one of claims 1 to 6, **characterized in** that said upper and lower sections (18, 20) of said rotary and stationary members (1, 2) have a substantially rotationally symmetrical cylindrical shape, with rounded outer surfaces (35, 36) alternating with plane outer surfaces (37, 38).

8. A rotary passage according to at least one of claims 1 to 7, **characterized in** that inlets (17, 43) which are separated from each other are provided on said upper section (18) of said rotary member (1), and that second outlets (19) are arranged on said lower section (20), and that first outlets (44) are arranged at the side of said hollow cylindrical section (5) in horizontally extending direction with respect to each other.

9. A rotary passage according to claim 7 or 8,
**characterized in** that said inlets (43) are provided on said plane outer surfaces (37), said first outlets (44) on said plane outer surfaces (46) and said second outlets (19) on a plane outer surface (38).

10. A rotary passage according to at least one of claims 1 to 9, **characterized in** that the feed lines (7, 12) of the respective rotary passage stage and the discharge lines (8, 13) of the respective rotary passage stage at the same level in said rotary passage have each substantially the same radial distance from a center axis (42).

11. A rotary passage according to at least one of claims 1 to 10, **characterized in** that said rotary passage has a central bore (21).

12. A rotary passage according to claim 11, **characterized in** that said central bore (21) is provided in said stationary member (2).

13. A rotary passage according to at least one of claims 1 to 12, **characterized in** that said rotary passage has a sliding ring body (23) for transmitting electric currents.

14. A rotary passage according to claim 13, **characterized in** that said sliding ring body (23) is an integral component of said rotary passage.

15. A rotary passage according to claim 12 or 13, **characterized in** that said sliding ring body (23) has electrically conductive contacts (24) which are insulated relative to each other and connected in antirotational fashion to said rotary member (1), and that said sliding ring body (23) has electrically conductive contacts (25) which are insulated relative to each other and fixedly connected to said stationary member (2) and are in engagement with a respectively associated rotary contact (24).

16. A rotary passage according to claim 15, **characterized in** that said rotary contacts (24) are formed as rings and said stationary contacts (25) as double-type sliding clips.

17. A rotary passage according to at least one of claims 11, 12, 13 or 14, **characterized in** that said stationary contacts (25) are connected within an upper recess (26) of said rotary passage to a stationary sleeve (27) on a stationary hollow-cylindrical section (28) whose cavity is formed by said central bore (21), and said rotary contacts (24) are connected to a rotary sleeve (29) on the vertical inner side (30) of said upper recess (26) of said rotary member (1).

18. A rotary passage according to at least one of claims 11, 12, 15-17, **characterized in** that said rotary electric lines (31) are connected to input terminals (32) on said rotary sleeve (29), and that said stationary electric lines (33) can be guided out through said stationary sleeve (27) and via said bore (21) downwards and are supplied to said output terminals (34).

19. A rotary passage according to at least one of claims 1 to 18, **characterized in** that said rotary member (1) is supported substantially via a bottom side (39) of said upper section (8) of said rotary member (1) on an upper side (40) of said outer hollow-cylindrical section (5) of said stationary member (2).

## Revendications

1. Jonction rotative pour le passage d'au moins deux liquides et/ou d'autres agents entre un élément pivotant (1) et un élément fixe (2), caractérisée en ce que, dans la jonction rotative, de l'extérieur vers l'intérieur, un segment à cylindre creux extérieur fixe (5), un segment à cylindre creux intérieur rotatif (16), un segment à cylindre creux intérieur fixe (9) et un cylindre (creux) intérieur rotatif (10) sont disposés emboîtés par paire de façon lamellaire, un premier étage de jonction rotative étant formé en ce que la surface de glissement (3) du segment à cylindre creux extérieur (5) de l'élément fixe (2) est en contact avec une surface de glissement (3') du segment à cylindre creux extérieur (16) de l'élément pivotant (1), que sur ces surfaces de glissement (3, 3') un grand nombre de canaux circulaires (6) horizontaux s'étendant parallèlement les uns aux autres sont prévus qui relient les premières conduites d'amenée (7) de l'élément pivotant (1) aux premières dérivations (8) de l'élément fixe (2), qu'un second étage de jonction rotative est formé en ce qu'une surface de glissement (4) du segment à cylindre creux intérieur (9) de l'élément fixe (2) est en contact avec une surface de glissement (4') du segment à cylindre creux intérieur (10) de l'élément pivotant (1), que sur ces surfaces de glissement (4, 4') dans le segment à cylindre creux intérieur (10), un grand nombre de canaux circulaires horizontaux (11), s'étendant parallèlement les uns aux autres, sont prévus qui relient les secondes conduites d'amenée (12) de l'élément pivotant avec les secondes dérivations (13) de l'élément fixe et qu'à tous les canaux circulaires (6, 11) des deux étages de jonction rotative, des dispositifs d'isolation respectivement supérieur et inférieur (14, 15) sur les surfaces de glissement (3, 4) sont attribués.

2. Jonction rotative selon la revendication 1, caractérisée en ce que pour chaque étage de jonction rotative, un autre agent actif différent est prévu.

3. Jonction rotative selon la revendication 2, caractérisée en ce que le premier étage de jonction rotative peut être traversé par un agent actif liquide et le second étage de jonction rotative par un agent actif gazeux.

4. Jonction rotative selon au moins l'une des revendications 1 à 3, caractérisée en ce que la jonction rotative présente au moins deux étages de jonction rotative.

5. Jonction rotative selon au moins l'une des revendications 1 à 4, caractérisée en ce que le nombre de canaux circulaires (6) du premier étage de jonction rotative peut être choisi indépendamment du nombre de canaux circulaires (11) du second étage de jonction rotative.

6. Jonction rotative selon au moins l'une des revendications 1 à 5, caractérisée en ce que les canaux circulaires (6) du premier étage de jonction rotative sont prévus dans le segment à cylindre creux extérieur (5).

7. Jonction rotative selon au moins l'une des revendications 1 à 6, caractérisée en ce que le segment supérieur et le segment inférieur (18, 20) de l'élément pivotant ou de l'élément fixe (1, 2) présente une forme essentiellement cylindrique à symétrie de révolution, des surfaces extérieures arrondies (35, 36) alternant avec des surfaces extérieures planes (37, 38).

8. Jonction rotative selon au moins l'une des revendications 1 à 7, caractérisée en ce que des admissions (17, 43) séparées les unes des autres sont prévues sur le segment supérieur (18) de l'élément pivotant (1), que des secondes admissions (19) sur le segment inférieur (20) et des premières admissions (44) s'étendant réciproquement à l'horizontale sont disposées sur le côté du segment à cylindre creux (5).

9. Jonction rotative selon la revendication 7 ou 8, caractérisée en ce que les admissions (43) sont prévues sur les surfaces extérieures planes (37), les premières sorties (44) sont prévues sur les surfaces planes extérieures (46) et les secondes sorties (19) sont prévues sur les surfaces planes extérieures (38).

10. Jonction rotative selon au moins l'une des revendications 1 à 9, caractérisée en ce que les conduites d'alimentation (7, 12) de l'étage de jonction rotative respectif et les dérivations (8, 13) de l'étage de jonction rotative respectif présentent respectivement pour l'essentiel les mêmes espacements radiaux par rapport à l'axe médian (42), à la même hauteur dans la jonction rotative.

11. Jonction rotative selon au moins l'une des revendications 1 à 10, caractérisée en ce que la jonction rotative présente un alésage central (21).

12. Jonction rotative selon la revendication 11, caractérisée en ce que l'alésage central (21) est prévu dans l'élément fixe (2).

13. Jonction rotative selon au moins l'une des revendications 1 à 12, caractérisée en ce que la jonction rotative présente un corps annulaire glissant (23) pour la transmission de courants électriques.

14. Jonction rotative selon la revendication 13, caractérisée en ce que le corps annulaire glissant (23) fait partie intégrante de la jonction rotative.

15. Jonction rotative selon la revendication 12 ou 13, caractérisée en ce le corps annulaire glissant (23) présente des contacts (24) conducteurs d'électricité qui sont isolés les uns par rapport aux autres et qui sont reliés fixe avec l'élément pivotant (1), et en ce que le corps annulaire glissant (23) présente des contacts (25) conducteurs d'électricité qui sont isolés les uns par rapport aux autres et qui sont reliés avec l'élément fixe (2) et qui sont en prise avec un contact rotatif correspondant (24).

16. Jonction rotative selon la revendication 15, caractérisée en ce que les contacts rotatifs (24) sont formés comme disques annulaires et les contacts fixes (25) comme doubles pinces glissantes.

17. Jonction rotative selon au moins l'une des revendications 11, 12, 13 ou 14, caractérisée en ce que les contacts fixes (25) sont reliés dans un creux supérieur (26) de la jonction rotative avec une cosse fixe (27) à un segment à cylindre creux fixe (28) dont l'espace vide est formé par l'alésage central (21), et les contacts rotatifs (24) sont reliés avec une cosse tournante (29) sur le côté vertical intérieur (30) du creux supérieur (26) de l'élément pivotant (1).

18. Jonction rotative selon au moins l'une des revendications 11, 12, 15 à 17, caractérisée en ce que les lignes électriques pivotantes (31) sont connectées à des admissions d'entrée (32) sur la cosse tournante (29) et en ce que les lignes électriques fixes (33) peuvent être guidées vers le bas, vers la sortie, par l'intermédiaire de la cosse fixe (27) et de l'alésage (21) et qu'elles sont amenées vers les branchements de sortie (34).

19. Jonction rotative selon au moins l'une des revendications 1 à 18, caractérisée en ce que l'élément pivotant (1) est essentiellement placé sur le côté supérieur (40) du segment à cylindre creux extérieur (5) de l'élément fixe (2) par l'intermédiaire d'un côté inférieur (39) du segment supérieur (18) de l'élément pivotant (1).
